# EUROPEAN PATENT APPLICATION

(11) **EP 4 730 181 A1**
(43) Date of publication of application: **22.04.2026**
(21) Application number: 25207909.0
(22) Date of filing: 10.10.2025
(51) Int. Cl.: G06F 21/62, G06N 20/00, G06F 21/60

(54) **OPTIMIZED USE OF PRIVACY BUDGET**

(30) Priority: 16.10.2024 FI 20246234
(71) Applicant: Nokia Solutions and Networks Oy, 02610 Espoo (FI)
(72) Inventor: DETHISE, Alice, Stuttgart (DE); AKKUS, Istemi Ekin, c/o Nokia Solutions and Networks GmbH, Stuttgart (DE); CHEN, Ruichuan, Marbach (DE)
(74) Representative: Bryers Intellectual Property Ltd

(57) **Abstract**

Method comprising
determining, in a trusted execution environment, values of hyperparameters of a machine learning model based on private data stored in the trusted execution environment, wherein the hyperparameters include system-specific hyperparameters and model-specific hyperparameters;
training, in the trusted execution environment, the machine learning model to which the determined values of the system-specific and model-specific hyperparameters are applied to obtain, after one or more epochs of training, a sufficiently trained machine learning model;
outputting the sufficiently trained machine learning model from the trusted execution environment; and,
inhibiting output of the determined values of the system-specific hyperparameters from the trusted execution environment, wherein
the system-specific hyperparameters are not accessible in the outputted sufficiently trained machine learning model.

## Description

### Technical Field

The present disclosure relates to maintaining privacy of private data.

### Abbreviations

- CCPA: California Consumer Privacy Act
- CPU: Central Processing Unit
- DP: Differential Privacy
- DP-SGD: Stochastic Gradient Descent with Differential Privacy
- FL: Federated Learning
- GDPR: General Data Protection Regulation
- ML: Machine Learning
- OS: Operating System
- SGX: Secure Guard Extensions
- TEE: Trusted Execution Environment

### Background

**Machine Learning.** Typically, Machine Learning (ML) requires frameworks, in which large datasets can be used. To increase the amount of data, different entities can collaborate to bring large datasets together. Such a collaboration requires the different entities to have guarantees that their confidential information (i.e., data) will not be publicly revealed (i.e., that privacy of the data is maintained).

**Data privacy.** Data privacy refers to keeping the records used as part of the training confidential. Confidential data might include, but is not limited to, medical records, credit card information or personal emails and addresses as well as measurements from sensors and industrial processes. Those records might have to be kept private/confidential for multiple reasons:
- Economic interests: the process of data collection and curation might be expensive and represent a costly investment, and leaking said information might mean a financial loss.
- Contractual requirements: A company handling the data of a client company or private customer might have to fulfil contractual obligations to keep said data private.
- Regulatory requirements: legislations like GDPR and CCPA require that the privacy of consumer data be protected.

### Summary

It is an object to improve the prior art.

According to a first aspect, there is provided an apparatus comprising
means for determining, in a trusted execution environment, values of hyperparameters of a machine learning model based on private data stored in the trusted execution environment, wherein the hyperparameters include system-specific hyperparameters and model-specific hyperparameters;
means for training, in the trusted execution environment, the machine learning model to which the determined values of the system-specific and model-specific hyperparameters are applied to obtain, after one or more epochs of training, a sufficiently trained machine learning model;
means for outputting the sufficiently trained machine learning model from the trusted execution environment; and,
means for inhibiting output of the determined values of the system-specific hyperparameters from the trusted execution environment, wherein
the system-specific hyperparameters are not accessible in the outputted sufficiently trained machine learning model.

The apparatus may further comprise
means for calculating a total value of a privacy budget by summing up the privacy budget expended for the determining the values of the hyperparameters and the privacy budget expended for the one or more epochs of the training; wherein,
the value of the privacy budget expended for the determining the values of the system-specific hyperparameters is 0.

The means for outputting may be configured to output additionally the total value of the privacy budget from the trusted execution environment.

The apparatus may further comprise
means for estimating an estimated value of the privacy budget to be expended for a further epoch of the training;
means for calculating an estimated total value of the privacy budget by summing up the total value of the privacy budget expended so far and the estimated value of the privacy budget to be expended for the further epoch of the training;
means for checking, if the estimated total value of the privacy budget exceeds a maximum privacy budget, wherein
the means for outputting is configured to output the trained machine learning model obtained by the epochs of the training performed without the further epoch of the training as the sufficiently trained machine learning model if the estimated total value of the privacy budget exceeds the maximum privacy budget.

The means for determining the values of the hyperparameters may be configured to apply a privacy protection mechanism to the private data and to determine the values of the hyperparameters based on the private data to which the privacy protection mechanism is applied.

The means for training the machine learning model may be configured to apply the privacy protection mechanism to data used for the training.

The privacy protection mechanism may be differential privacy.

At least one of the hyperparameters may configure the privacy protection mechanism.

The at least one of the hyperparameters configuring the privacy protection mechanism may be a noise level to be added to the at least one of the private data or the data used for the training or a clipping bound.

The noise level may be system-specific. The clipping bound may be model-specific.

At least one of the hyperparameters may configure the training of the machine learning model.

The at least one of the hyperparameters configuring the training of the machine learning model may be a batch size of the data used in the training or a learning rate for the training.

The batch size may be system-specific. The learning rate may be model-specific.

The means for training may be configured to use at least a subset of the private data for the training.

The apparatus may further comprise
means for deleting or encrypting the system-specific hyperparameters when the sufficiently trained machine learning model is obtained.

The apparatus may further comprise
means for deciding whether one of the hyperparameters is system-specific.

The trusted execution environment may be configured to guarantee that a code representing the apparatus, the hyperparameters, and the private data are protected within the trusted execution environment with respect to confidentiality and integrity.

According to a second aspect, there is provided a method comprising
determining, in a trusted execution environment, values of hyperparameters of a machine learning model based on private data stored in the trusted execution environment, wherein the hyperparameters include system-specific hyperparameters and model-specific hyperparameters;
training, in the trusted execution environment, the machine learning model to which the determined values of the system-specific and model-specific hyperparameters are applied to obtain, after one or more epochs of training, a sufficiently trained machine learning model;
outputting the sufficiently trained machine learning model from the trusted execution environment; and,
inhibiting output of the determined values of the system-specific hyperparameters from the trusted execution environment, wherein
the system-specific hyperparameters are not accessible in the outputted sufficiently trained machine learning model.

The method may further comprise
calculating a total value of a privacy budget by summing up the privacy budget expended for the determining the values of the hyperparameters and the privacy budget expended for the one or more epochs of the training; wherein,
the value of the privacy budget expended for the determining the values of the system-specific hyperparameters is 0.

The method may further comprise outputting the total value of the privacy budget from the trusted execution environment.

The method may further comprise
estimating an estimated value of the privacy budget to be expended for a further epoch of the training;
calculating an estimated total value of the privacy budget by summing up the total value of the privacy budget expended so far and the estimated value of the privacy budget to be expended for the further epoch of the training;
checking, if the estimated total value of the privacy budget exceeds a maximum privacy budget, outputting the trained machine learning model obtained by the epochs of the training performed without the further epoch of the training as the sufficiently trained machine learning model if the estimated total value of the privacy budget exceeds the maximum privacy budget.

The determining the values of the hyperparameters may comprise applying a privacy protection mechanism to the private data and determining the values of the hyperparameters based on the private data to which the privacy protection mechanism is applied.

The training the machine learning model may comprise applying the privacy protection mechanism to data used for the training.

The privacy protection mechanism may be differential privacy.

At least one of the hyperparameters may configure the privacy protection mechanism.

The at least one of the hyperparameters configuring the privacy protection mechanism may be a noise level to be added to the at least one of the private data or the data used for the training or a clipping bound.

The noise level may be system-specific. The clipping bound may be model-specific.

At least one of the hyperparameters may configure the training of the machine learning model.

The at least one of the hyperparameters configuring the training of the machine learning model may be a batch size of the data used in the training or a learning rate for the training.

The batch size may be system-specific. The learning rate may be model-specific.

The training may comprise using at least a subset of the private data for the training.

The method may further comprise
deleting or encrypting the system-specific hyperparameters when the sufficiently trained machine learning model is obtained.

The method may further comprise
deciding whether one of the hyperparameters is system-specific.

The trusted execution environment may be configured to guarantee that a code representing the method, the hyperparameters, and the private data are protected within the trusted execution environment with respect to confidentiality and integrity.

According to a third aspect, there is provided a computer program product comprising a set of instructions which, when executed on an apparatus, is configured to cause the apparatus to carry out the method according to the second aspect. The computer program product may be embodied as a computer-readable medium or directly loadable into a computer.

According to some example embodiments, at least one of the following advantages may be achieved:
- Privacy of data may be maintained;
- The privacy budget available for determining values of model-specific hyperparameters and for training may be increased for a given total privacy budget;
- For a same number of training epochs, the expended privacy budget may be smaller than conventionally.

### Brief description of the drawings

Further details, features, objects, and advantages are apparent from the following detailed description of the preferred example embodiments which is to be taken in conjunction with the appended drawings, wherein:
Fig. 1 shows a privacy budget (left), a conventional split of the privacy budget (middle), and a split of the privacy budget according to some example embodiments;
Fig. 2 shows an overview of a system according to some example embodiments;
Fig. 3 illustrates a method according to some example embodiments;

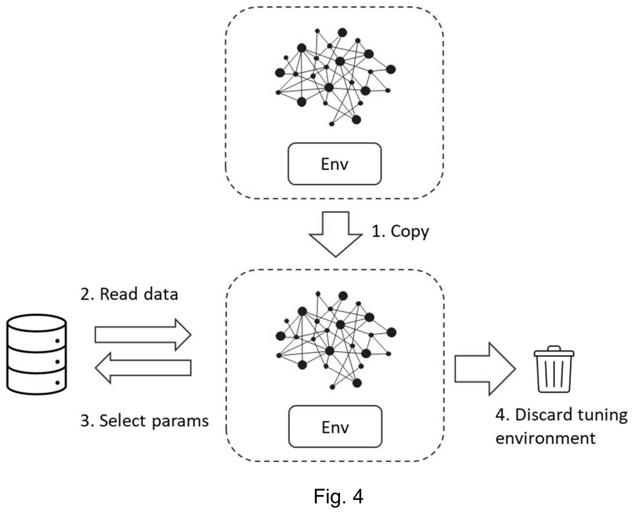

Fig. 4 illustrates use of a temporary environment for determining values of hyperparameters according to some example embodiments;
Fig. 5 shows an apparatus according to an example embodiment;
Fig. 6 shows a method according to an example embodiment; and
Fig. 7 shows an apparatus according to an example embodiment.

### Detailed description of certain example embodiments

Herein below, certain example embodiments are described in detail with reference to the accompanying drawings, wherein the features of the example embodiments can be freely combined with each other unless otherwise described. However, it is to be expressly understood that the description of certain example embodiments is given by way of example only, and that it is by no way intended to be understood as limiting the disclosure to the disclosed details.

Moreover, it is to be understood that the apparatus is configured to perform the corresponding method, although in some cases only the apparatus or only the method are described.

**Differential Privacy.** Differential privacy (DP) is a technique for publicly sharing information about a dataset while withholding information about individuals in the dataset. The shared information represents the general patterns of the dataset, but not about individual points. In the context of ML, DP exposes (either during training or through the final model) general trends about the training data without revealing if any specific data point was used for training the model.

Differential privacy (DP) is an approach for providing privacy while sharing information about a group of individuals, by describing the patterns within the group while withholding information about specific individuals. This is done by making random small changes to individual data that do not (or hardly) change the statistics of interest. Thus, the data cannot be used to infer much about any individual. Another way to describe differential privacy is as a constraint on the algorithms used to publish aggregate information about a statistical database which limits the disclosure of private information of records in the database. Roughly, an algorithm is differentially private if an observer seeing its output cannot tell whether a particular individual's information was used in the computation.

The concept of ε-differential privacy provides a mathematical definition for the privacy loss associated with any data release drawn from a statistical database. Here, the term statistical database means a set of data that are collected under the pledge of confidentiality for the purpose of producing statistics that, by their production, do not compromise the privacy of those individuals who provided the data.

The intuition for a definition of ε-differential privacy is that a person's privacy cannot be compromised by a statistical release if their data are not in the database. Therefore, with differential privacy, the goal is to give each individual roughly the same privacy that would result from having their data removed. That is, the statistical functions run on the database should not overly depend on the data of any one individual.

The level of privacy ε-differential privacy is defined by the value of ε. The larger the value of ε is, the higher is the risk that privacy may be violated. In some cases, there is a second parameter δ such that the pair (ε, δ) defines the level of privacy. However, δ is usually very small (e.g. 10⁻⁵) and may be often neglected for the purpose of the present application. Nevertheless, the application may be applied to cases of (ε, δ) privacy, too.

Training of a neural network providing (ε, δ) privacy or ε privacy is made such that a random value is added to each of the training data of the training data set before the training data are input into the neural network. The training data are labelled, i.e., the ground truth is indicated.

DP limits how *privacy-leaking operations* can be made. In DP, privacy is represented by two values, commonly referred to as (*ε*, *δ*)-privacy. Those values are used to compute the *privacy leakage,* i.e., a term that refers to how likely an attacker is to "guess" a private data point. The privacy leakage increases, i.e., the likelihood to guess the data increases, when any privacy-leaking computation is done on the private data.

Very often, privacy requirements are defined as a *privacy budget,* i.e., the upper bound on privacy leakage. Once the leakage reaches the pre-defined privacy budget, no more privacy-leaking computation should be done in order to avoid that privacy of some data may be violated with at least a certain probability.

**ML Model Hyperparameter Search.** When training ML models, independently of the framework some decisions must be made regarding how to tune the values of the *training hyperparameters* of the model. Such hyperparameters include, but are not limited to, the *learning rate, batch size* and the *training loss.* Correct tuning of the values of the hyperparameters may be relevant to ensure that the model will converge to a state yielding satisfying results, and how fast such a state will be reached.

In addition to the tuning of the values of training hyperparameters, the use of DP *in the context of ML* requires additional *privacy hyperparameters* the values of which must be tuned to achieve a good convergence of the model training and efficient use of the allocated privacy budget, similar to tuning the values of the training hyperparameters. Privacy hyperparameters include, but are not limited to, the amount of noise to be added, the subsampling rate of data elements, and gradient clipping bounds.

**Trusted Execution Environment.** A trusted execution environment (TEE) is a secure area of a main processor. It guarantees code and data loaded inside the TEE to be protected with respect to confidentiality and integrity. A TEE provides the applications with an isolated execution and their integrity as well as the integrity and confidentiality of their assets. In general terms, the TEE offers an execution space that provides a higher level of security for trusted applications than a rich operating system (OS) and more functionality than a 'secure element'.

TEEs ensure the integrity of the code running on the chip by providing hardware-based guarantees that this code matches a public, agreed-upon program. Because the program must be trusted, one may, without any loss of generalizability, assume that the source code is available to all parties allowed to verify the TEE. Although the program itself is public, the inputs it receives remain private to both the OS and external attackers.

TEEs are integrated on several processor platforms from chip manufacturers such as Intel and ARM. The most popular commercially available TEE solution is Intel's Software Guard Extensions (SGX). SGX is a set of security-related instruction codes that are built into modern Intel CPUs. They allow user-level as well as operating system code to define private regions of memory, called enclaves, whose contents are protected and unable to be either read or saved by any process outside the enclave itself but can be programmatically attested by remote parties.

For the present application, the terms used in SGX (such as "enclave") are used, but embodiments are not limited to SGX. Other execution environments guaranteeing that a code representing the apparatus, the hyperparameters, and the private data are protected within the TEE with respect to confidentiality and integrity may be used instead of or in addition to SGX.

Some example embodiments improve the usage of a finite privacy budget, in particular in the context of a privacy protection mechanism such as DP or k-anonymity. More specifically, in some example embodiments, the portion of the privacy budget used for determining values of hyperparameters based on privacy data is reduced. For this purpose, a TEE-based learning environment is used.

If the entity performing the tuning of the values of the hyperparameters and/or the model training is distinct from the entity providing the private data (otherwise, privacy leakage inside the data owner's own domain is not a concern), a TEE may be used to guarantee the confidentiality of the data against direct access by an unauthorized party: the data is decrypted inside the TEE, used to train the model, then the trained model is released while the data remains confidential. Examples of TEEs are Confidential Virtual Machines, such as Intel's TDX (Trusted Domain Extension) or AMD's SEV-SNP (Secure Encrypted Virtualization - Secure Nested Paging), and Application enclaves, such as Intel SGX (Software Guard Extensions) or ARM TrustZone. However, the trained model comprises necessarily some fingerprint of the private data such that privacy may nevertheless be violated. That is, some privacy budget is expended in determining the values of the hyperparameters and/or the training of the model based on the private data. In particular, some portion of the privacy budget may be expended for determining the values of the hyperparameters if the hyperparameters are determined based on the private data, and some portion of the privacy budget may by expended for each training epoch if the training is performed based on the private data.

This issue stems from the following property of DP: *Any decision that depends on the private data incurs a loss of privacy of that data.* While the sensitivity of the decision (or of the query leading to that decision) can be small in optimistic cases, it is never zero if private data influence the result. The same applies to other privacy protection mechanisms.

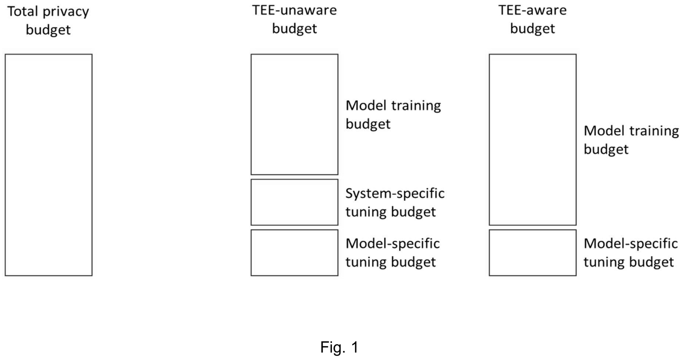

Fig. 1 illustrates how a given privacy budget (shown on the left side) may be split conventionally (shown in the middle) and according to some example embodiments (shown on the right side). Conventionally, the privacy budget is used for tuning (determining) the values of the hyperparameters (training hyperparameters and privacy hyperparameters) and for model training, wherein the model training is based on the model to which the determined values of the hyperparameters are applied. If both determining the values of the hyperparameters and model training are based on the private data, each of these actions expends some privacy budget.

The hyperparameters may be split into four different categories, as shown in Table 1. From a functional point of view (horizontal in Table 1), there are training hyperparameters related to the training without applying a privacy protection mechanism and privacy hyperparameters related to the privacy protection mechanism (such as DP). From a visibility point of view (vertical in Table 1), there are system-specific hyperparameters which are not visible in the trained ML model (and thus, not accessible from the trained ML model), and model-specific hyperparameters which are visible in the trained ML model (and thus, accessible from the trained ML model). The system-specific hyperparameters are only used by and known to the system.

Thus, there are:
- system-specific training hyperparameters;
- model-specific training hyperparameters;
- system-specific privacy hyperparameters; and
- model-specific privacy hyperparameters.

Table 1 indicates a typical example for each of these types of hyperparameters.

**Table 1: Types of hyperparameters and examples thereof**

| | **training hyperparameters** | **privacy hyperparameters** |
|---|---|---|
| **system-specific hyperparameters** | batch size | noise level |
| **model-specific hyperparameters** | learning rate | clipping bound |

Batch size, noise level, learning rate, and clipping bound typically belong to the respective type of hyperparameters for the following reasons:
- Batch size: The number of data elements processed at each round of training. It is system-specific if and when the model only receives an average value for the batch, as it is often the case.
- Noise level: Variance of the probabilistic distribution the noise values added by DP mechanisms are sampled from. As the model normally does not know how much of the received updates is noise and how much is true values, this hyperparameter is typically system-specific.
- Learning rate: An hyperparameter used to determine the magnitude of the update to apply to the model. It directly affects how the model update is applied and can be controlled by the learning algorithm, thus is typically expected to be visible to the model and/or learning algorithm and, hence, model-specific.
- Clipping bound: The maximum magnitude of the gradients used for model updates. While not directly visible to the model, this value often can be guessed by the model by simply observing the largest values received in model updates and is, thus, typically model-specific.

In the conventional case (middle of Fig. 1), tuning (determining) the values of both the system specific hyperparameters and the model-specific hyperparameters based on the private data expends some privacy budget ("system-specific tuning budget" and "model-specific tuning budget" in Fig. 1). In some example embodiments, the values of the system-specific hyperparameters are determined (tuned) without expending any privacy budget. I.e., the system-specific tuning budget is 0, as shown on the right side of Fig. 1. Accordingly, the model-specific tuning budget and/or the model training budget may be increased.

Since the portion of the privacy budget used for determining the values of the hyperparameters is reduced compared to a conventional case (because the system-specific tuning budget is 0), some example embodiments increase the number of training epochs that the system can dedicate to training the model based on the private data to improve its performance and accuracy, given a fixed and finite amount of privacy budget. As another option, for the same number of training epochs as in a conventional case, in some example embodiments, the used privacy budget may be reduced such that privacy is improved even though the trained ML model has a same performance and accuracy as in the conventional case.

In some example embodiments, the system-specific tuning budget is 0 because both the tuning of the values of the hyperparameters and the training for the ML model applying the tuned values of the hyperparameters is performed inside a TEE, and the values of the system-specific hyperparameters are not output from the TEE. For example, the system-specific hyperparameters remain in the TEE (preferably in encrypted form) after the trained model (a sufficiently trained model or a finally trained model) is output from the TEE, or the system-specific hyperparameters are deleted after the trained model is output from the TEE. Since the system-specific hyperparameters are not visible in the outputted trained model and not accessible within the TEE, nobody can derive them and, thus, they do not contribute to the expending of the privacy budget.

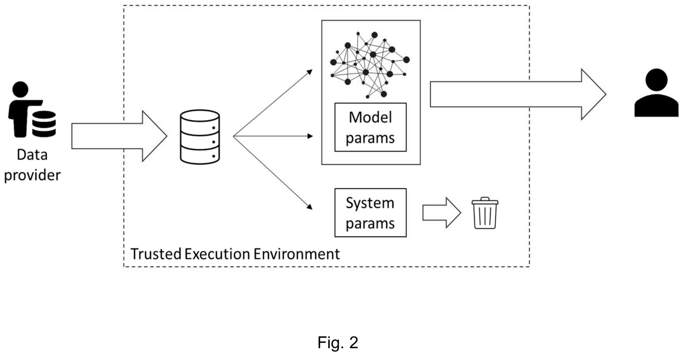

As shown in Fig. 2, in some example embodiments, the following actions are performed:
- A data provider uploads their private data into a TEE enclave (system). Preferably, the TEE enclave runs verified code.
- The model trainer uses these private data to tune (determine) the values of system-specific and model specific hyperparameters. Determining the values of the hyperparameters can be done through an arbitrary program. The TEE enclave ensures that this program does not leak any information.
- The system performs model training with the determined values of the hyperparameters. This training is performed within the TEE enclave and does not reveal the hyperparameters.
- When the training finishes (i.e., the model is sufficiently trained), the values of the system-specific hyperparameters are discarded (or encrypted) within the TEE enclave and can no longer be recovered.
- The sufficiently trained model is output to the model trainer, outside of the TEE enclave. The system-specific hyperparameters are not output to the outside of the TEE enclave.

Some relevant aspects of some example embodiments are summarized below:
1. The determining of the values of the (system-specific and model-specific) hyperparameters and the ML model training runs inside a TEE enclave. The code running inside that enclave keeps track of the expended privacy budget and excludes from this privacy accounting the privacy leakage from the tuning of the values of system-specific (training and privacy) hyperparameters. These hyperparameters may be specific to this training session.
2. The model trainer provides a program that determines the values of the ML training and privacy hyperparameters based on the private dataset. This program runs inside the TEE enclave. It cannot leak any information to the outside, and only returns the determined values of the hyperparameters to trusted components of the system inside the enclave.
3. This tuning of the values of the hyperparameters (i.e., decision and selection of what ML training and privacy hyperparameters to use) can take one of the following forms.
   a. Directly computed from the dataset features, values or format.
   b. Experimentally determined by running partial training (such as training for a small number of iterations). This partial training can either happen once, or multiple times (e.g., grid search).
   c. A combination of the two approaches above.
   In these cases, none of the intermediate results can be used after determining the values of the system-specific hyperparameters. If a specific hyperparameter should not be used (is not selected), this non-selection may be equivalent to setting the value of this hyperparameter to a specific value (such as 0 for summation or 1 for multiplication).
4. The system running the training session keeps the hyperparameters secret during training and discards them after use. In some example embodiments, this action can be confirmed by any dataset provider because they can verify and attest that the code that is responsible for keeping track of the privacy budget and discarding hyperparameters is correct and preserves the dataset privacy.
5. The system distinguishes between hyperparameters that are system-specific (used during the training, but only visible to the system during the training session) and hyperparameters that are model-specific (visible by the model and released at the end of the training). Note that the model-specific hyperparameters are *not* excluded from the privacy accounting (i.e., the model-specific tuning budget shown at the bottom part of the stacks in Fig. 1), since they are accessible from the outputted trained model (for the model trainer, for example) and thus leak privacy.

The privacy budget expended for a specific model parameter may be calculated as follows, for example:
The clipping bound (typically a model-specific privacy hyperparameter) might be determined from directly observing the data and computed gradients, to select a value that ensures that not too many of the gradients will be clipped. To ensure privacy, the sensitivity of this value must first be computed (a standard step for applying DP to a particular mechanism), and a proportionate amount of noise must then be added to the value to preserve the privacy of the data. The sensitivity and amount of noise, together, determine how much of the privacy budget must be expended to determine the hyperparameter "clipping bound".

Another way to determine the optimal values of the hyperparameters is to run a sample training for a small number of epochs. For example, the model could be trained from scratch, for five training epochs, with different values of the learning rate hyperparameter (typically a model-specific training hyperparameter). Then, the learning rate which, among those tested, yields the model with the highest accuracy is selected, and the expended privacy budget is determined by standard DP-SGD privacy accounting, combined with additional privacy mechanisms, if any, applied to the learning rate value."

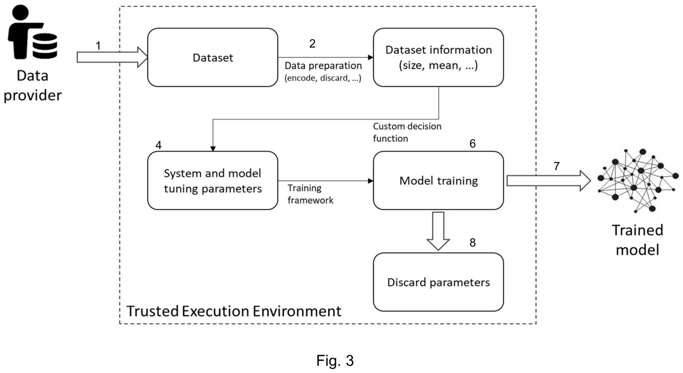

Fig. 3 shows a method according to some example embodiments. The method may comprise more actions not shown in Fig. 3.
1. The dataset comprising the private data is uploaded into the secure TEE enclave.
2. Dataset preparation (including encoding of the data, and discarding of unwanted elements) occurs within the TEE. For the rest of the process shown in Fig. 3, it is assumed that every data element will be used for both tuning of the values of the hyperparameters and model training, although this assumption is not mandatory.
3. (not mandatory, not shown in Fig. 3) A temporary environment is created to perform the tuning of the values of the hyperparameters. The temporary environment may be created by either copying or checkpointing the base environment. This temporary environment may be allowed to use arbitrary operations to tune the values of the training and privacy hyperparameters (including the use of custom, secret functions), but cannot leak any information to outside of the temporary environment.
4. The dataset is sent to the hyperparameter tuning environment, which determines the values of the system-specific hyperparameters based on the dataset including the private data. Because the values of the system-specific hyperparameters will not be outputted before or after training finishes, this tuning does not expend any privacy budget. Furthermore, the hyperparameter tuning environment determines the values of the model-specific hyperparameters based on the dataset including the private data. Because the model-specific hyperparameters are accessible from the outputted trained ML model, this tuning expends some privacy budget (≠ 0). The sequence of determining the values of the system-specific hyperparameters and the model-specific hyperparameters is arbitrary. The values of the system-specific hyperparameters and the model-specific hyperparameters may be determined fully or partly in parallel.
   In Fig. 3, this tuning of the hyperparameters is performed by a "Custom decision function": It means that deciding the value of the hyperparameters relies on a particular algorithm that is independent of the training framework (and often is specific to a particular model and/or learning algorithm). In other words, it is a black-box that takes the data as input and outputs the selected values and spent privacy budget (for model-specific parameters), but is otherwise entirely "customizable".
5. (not mandatory, not shown in Fig. 3) The hyperparameter tuning environment is destroyed (if made by copy) or rolled back (if made by checkpointing) to erase any privacy loss occurring as a result of seeing the private data.
6. Model training is performed, wherein the determined values of the hyperparameters are applied and kept fixed (are not modified). The system keeps track of the privacy budget expended as a result of both tuning of the values of the hyperparameters and training. For example, the training manager may estimate, for each further training epoch, the privacy budget to be expended for the respective further training epoch. If the sum of the already expended privacy budget (due to determining the values of the model-specific hyperparameters and the previous training epochs) and the estimated privacy budget for the respective further training epoch exceeds the total privacy budget, the model may be considered to be sufficiently trained (for the given total privacy budget) and output from the TEE. Accordingly, the training may be terminated.
7. At the end of the training (when the total privacy budget is expended, as described in 6.; or when some other condition for terminating the training is fulfilled before the total privacy budget is expended, for example), the trained model is outputted (released) to outside of the TEE (to the model trainer, for example). The outputted trained model may be used in inference.
8. The TEE is either destroyed or, if kept alive, ensures that the system-specific hyperparameters and can no longer be used for any other purpose. For example, the system-specific hyperparameters are discarded. The actions of this TEE can be verified by dataset owners because they can check the code responsible for discarding the system-specific hyperparameters and keeping track of the privacy budget expended during training. The sequence of actions 7 and 8 is arbitrary. They may be performed fully or partly in parallel.

The tuning of the values of the hyperparameters may be implemented as a separate *configuration function* in order to let the system automatically determine the values of the hyperparameters without reducing the model provider's ability to (fine-)tune the values of the hyperparameters with specific, optimized algorithms. This configuration function receives as input the prepared dataset, and outputs the system-specific and model-specific hyperparameters to use during training. Any computation may take place to determine the values of the hyperparameters provided that the computation does not leak any information on the private data or the system-specific hyperparameters to outside of the TEE.

Examples of system-specific hyperparameters include batch sizes, DP noise level (*σ*), DP clipping bound, use of subsampling, individual component timeouts, and the aggregation method.

Examples of model-specific hyperparameters include number of training rounds, learning rate, loss function, and gradient shapes.

Note that the type of a certain hyperparameter depends on the implementation. For example, according to some implementation, the batch size may be a system-specific training hyperparameter, while according to other implementations, it may be a model-specific hyperparameter.

In some example embodiments, the model trainer may predefine whether a certain hyperparameter is system-specific or model-specific. Namely, many hyperparameters are well understood by ML experts, whose expertise helps them assess whether or not a particular hyperparameter's value will be visible to the model. In some example embodiments, the system decides autonomously whether a certain hyperparameter is system-specific or model-specific. Two possible ways of an autonomous decision are symbolic execution (observing if an hyperparameter value is part of computing any of the values that are visible to the model) and correlation analysis (observing empirically if changing the value of one hyperparameter causes a noticeable change in the values visible to the model). In some example embodiments, the system decides autonomously for each of the hyperparameters whether the respective hyperparameter is system-specific or model-specific. In some example embodiments, the model trainer predefines the type of some hyperparameters, and the system decides autonomously on the types of the other hyperparameters.

For example, one or more of the following techniques may be used inside the custom decision function:
- Selecting values based on the information of the dataset itself. Such information can be, for example, the number of data elements, the mean value of those elements, an estimation of the sparsity of the input space, or the variance between dataset elements. Dataset information can be used to select hyperparameters that directly relate to dataset information (for example, setting minibatch size based on the number of data elements).
- Selecting values based on sample runs of the training. This can be achieved by running the ML training for a duration much shorter than a complete training run and observing the initial behavior of the model (e.g., early convergence). In this case, any training steps done within the configuration are discarded after the values of the hyperparameters are determined for the actual training.
- A combination of the two techniques above can be used to determine the values of the hyperparameters. For example, dataset information can be used to create a *grid search plan,* generating several sample configurations, where partial training runs are used to find potentially the best possible values of the hyperparameters.

Typically, any intermediate results generated within the configuration function, other than the values of the hyperparameters themselves (to be used during training), may be discarded after completion. To achieve this while also preserving the flexibility to set up diverse configuration environments (such as in the case where a complete training environment must be set up), one of the following two techniques may be applied: copy-and-discard or checkpoint-and-rollback.

*Copy-and-discard* (Fig*.* 4) involves creating, within the TEE, a complete duplicate of the original training environment, including pre-existing model states, global variables and any newly created variables. The private dataset is then loaded within the duplicate environment. Any information computed therein is confined to the duplicate environment.

Once the values of the hyperparameters have been determined, the duplicate environment is entirely discarded, and the original environment (which has not seen any of the private data) is restored. Thus, it is ensured that the configuration function does not leak any private information.

*Checkpoint-and-rollback* avoids the need to entirely copy the environment (as in copy-and-discard) by creating a recovery mechanism for the original state of the environment, using a combination of shallow copies, state bits, and tracking of any change made inside the environment.

With this technique, after the configuration is completed, all changes made within the environment are "undone" to restore the original state, before any of the private data was seen. This provides the same guarantees as the copy-and-discard mechanism but may require fewer memory operations.

**Tracking of privacy budget.** For the system to guarantee a given DP privacy level (i.e., not to expend more than the total privacy budget), the system must keep track of the expended privacy budget during training. For example, the training manager may estimate, for each further training epoch, the privacy budget to be expended for the respective further training epoch. If the sum of the already expended privacy budget (due to determining the values of the model-specific hyperparameters and the previous training epochs) and the estimated privacy budget for the respective further training epoch exceeds the total privacy budget, the model may be considered to be sufficiently trained (for the given total privacy budget) and output from the TEE.

Some example embodiments guarantee that the *system-specific hyperparameters* cannot be derived from the outputted trained model, and thus, no privacy budget is expended in tuning the values of the system-specific hyperparameters.

Concretely, according to some example embodiments, the ML training now has only two sources of privacy leakage (instead of the three according to conventional methods): the tuning of the values of model-specific hyperparameters (which the model sees and thus incur a privacy leakage), and the training epochs. To ensure that the privacy budget is computed correctly, we can either:
- Keep a running account of the expended privacy budget, and dynamically adapt the privacy budget for tuning of the values of the hyperparameters and model training to make use of the additional opportunity (for example, by performing more epochs of training to improve model accuracy).
- Report the "recovered" privacy budget at the end of the training, resulting in higher privacy guarantees through the privacy budget not expended.

TEE execution guarantees that every step will be taken correctly. As a result, no loss of privacy occurs if the additionally available privacy budget is expended before the system-specific hyperparameters are discarded. To enforce this, it should be guaranteed that the system will forget any private data and system-specific hyperparameters if entering a failure state.

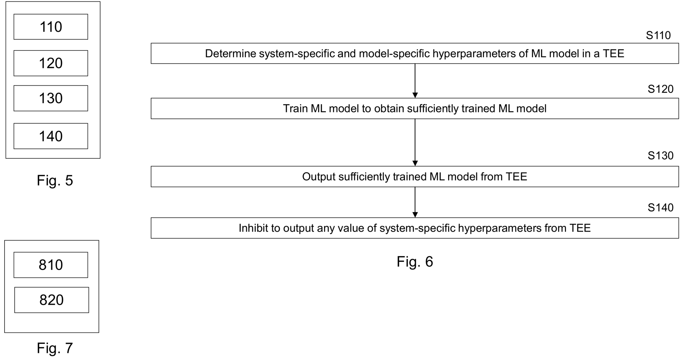

Fig. 5 shows an apparatus according to an example embodiment. The apparatus may be an configurator for hyperparameters or an element thereof. Fig. 6 shows a method according to an example embodiment. The apparatus according to Fig. 5 may perform the method of Fig. 6 but is not limited to this method. The method of Fig. 6 may be performed by the apparatus of Fig. 5 but is not limited to being performed by this apparatus.

The apparatus comprises means for determining 110, means for training 120, means for outputting 130, and means for inhibiting 140. The means for determining 110, means for training 120, means for outputting 130, and means for inhibiting 140 may be a determining means, training means, outputting means, and inhibiting means, respectively. The means for determining 110, means for training 120, means for outputting 130, and means for inhibiting 140 may be a determiner, trainer, outputter, and inhibiter, respectively. The means for determining 110, means for training 120, means for outputting 130, and means for inhibiting 140 may be a determining processor, training processor, outputting processor, and inhibiting processor, respectively.

The means for determining 110 determines, in a TEE, values of hyperparameters of a ML model based on private data stored in the TEE (S110). The hyperparameters include system-specific hyperparameters and model-specific hyperparameters.

The means for training 120 trains, in the TEE, the ML model to which the determined values of the system-specific and model-specific hyperparameters are applied (S120). Thus, the means for training 120 obtains, after one or more epochs of training, a sufficiently trained ML model. The system-specific hyperparameters are not accessible in the outputted sufficiently trained ML model.

The means for outputting 130 outputs the sufficiently trained ML model from the TEE (S130).

The means for inhibiting 140 inhibits output of values of the determined values of the system-specific hyperparameters from the TEE (S140).

Fig. 7 shows an apparatus according to an example embodiment. The apparatus comprises at least one processor 810, at least one memory 820 storing instructions that, when executed by the at least one processor 810, cause the apparatus at least to perform the method according to Fig. 6 and related description.

In some example embodiments, the private data are used for both determining the values of the hyperparameters and the model training. In some example embodiments, the private data are used for determining the values of the hyperparameters. For the model training, there are different options:
- The model training may use the same private data as used for determining the values of the hyperparameters;
- The model training may use a subset of the private data used for determining the values of the hyperparameters;
- The model training may use other private data than the private data used for the determining the values of the hyperparameters (in addition to or instead of at least a subset of the private data used for the determining the values of the hyperparameters);
- The model training may not use any private data. In this case, the entire privacy budget may be used for determining the values of the hyperparameters. According to some example embodiments, in this case, the entire privacy budget may be used for determining the values of the model-specific hyperparameters.

The term "private data" means data that must be protected with respect to confidentiality and preferably also with respect to integrity (according to some contract between the data provider and the model trainer, or for business reasons of the model trainer, for example).

In some example embodiments, a privacy protection mechanism (such as DP or k-anonymity) is applied to the private data for both determining the values of the hyperparameters and training of the model. The privacy protection mechanism and its parameters for determining the values of the hyperparameters may be the same as the privacy protection mechanism and its parameters for model training. The privacy protection mechanism and/or its parameters for determining the values of the hyperparameters may be different from the privacy protection mechanism and/or its parameters for model training.

Applying a privacy protection mechanism (such as DP or k-anonymity) is not mandatory. In some example embodiments, a privacy protection mechanism may not be used in determining the values of the hyperparameters. In some example embodiments, a privacy protection mechanism may not be used in model training. In some example embodiments, a privacy protection mechanism may not be used in determining the values of the hyperparameters and in model training.

One piece of information may be transmitted in one or plural messages from one entity to another entity. Each of these messages may comprise further (different) pieces of information.

Names of network elements, network functions, protocols, and methods are based on current standards, or are current proposals. These names are not limiting. For example, in other versions or other technologies, the names of corresponding entities may be different or the same as in the present description.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be deployed in the cloud.

According to the above description, it should thus be apparent that example embodiments provide, for example, a configurator for hyperparameters or an element thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Each of the entities described in the present description may be embodied in the cloud.

It is to be understood that what is described above is what is presently considered the preferred example embodiments. However, it should be noted that the description of the preferred example embodiments is given by way of example only and that various modifications may be made without departing from the scope of the disclosure as defined by the appended claims.

The terms "first X" and "second X" include the options that "first X" is the same as "second X" and that "first X" is different from "second X", unless otherwise specified. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. The term "or" refers to a non-exclusive "or" unless otherwise indicated (e.g., use of "or else" or "or in the alternative").

## Claims

1. Apparatus comprising
means for determining, in a trusted execution environment, values of hyperparameters of a machine learning model based on private data stored in the trusted execution environment, wherein the hyperparameters include system-specific hyperparameters and model-specific hyperparameters;
means for training, in the trusted execution environment, the machine learning model to which the determined values of the system-specific and model-specific hyperparameters are applied to obtain, after one or more epochs of training, a sufficiently trained machine learning model;
means for outputting the sufficiently trained machine learning model from the trusted execution environment; and,
means for inhibiting output of the determined values of the system-specific hyperparameters from the trusted execution environment, wherein
the system-specific hyperparameters are not accessible in the outputted sufficiently trained machine learning model.

2. The apparatus according to claim 1, further comprising
means for calculating a total value of a privacy budget by summing up the privacy budget expended for the determining the values of the hyperparameters and the privacy budget expended for the one or more epochs of the training; wherein,
the value of the privacy budget expended for the determining the values of the system-specific hyperparameters is 0.

3. The apparatus according to claim 2, wherein
the means for outputting is configured to output additionally the total value of the privacy budget from the trusted execution environment.

4. The apparatus according to any of claims 2 and 3, further comprising
means for estimating an estimated value of the privacy budget to be expended for a further epoch of the training;
means for calculating an estimated total value of the privacy budget by summing up the total value of the privacy budget expended so far and the estimated value of the privacy budget to be expended for the further epoch of the training;
means for checking, if the estimated total value of the privacy budget exceeds a maximum privacy budget, wherein
the means for outputting is configured to output the trained machine learning model obtained by the epochs of the training performed without the further epoch of the training as the sufficiently trained machine learning model if the estimated total value of the privacy budget exceeds the maximum privacy budget.

5. The apparatus according to any of claims 1 to 4, wherein at least one of
the means for determining the values of the hyperparameters is configured to apply a privacy protection mechanism to the private data and to determine the values of the hyperparameters based on the private data to which the privacy protection mechanism is applied; or
the means for training the machine learning model is configured to apply the privacy protection mechanism to data used for the training.

6. The apparatus according to claim 5, wherein the privacy protection mechanism is differential privacy.

7. The apparatus according to any of claims 5 and 6, wherein at least one of the hyperparameters configures the privacy protection mechanism.

8. The apparatus according to claim 7, wherein the at least one of the hyperparameters configuring the privacy protection mechanism is a noise level to be added to the at least one of the private data or the data used for the training or a clipping bound.

9. The apparatus according to claim 8, wherein at least one of:
the noise level is system-specific; or
the clipping bound is model-specific.

10. The apparatus according to any of claims 1 to 9, wherein at least one of the hyperparameters configures the training of the machine learning model.

11. The apparatus according to claim 10, wherein the at least one of the hyperparameters configuring the training of the machine learning model is a batch size of the data used in the training or a learning rate for the training.

12. The apparatus according to claim 11, wherein at least one of:
the batch size is system-specific; or
the learning rate is model-specific.

13. The apparatus according to any of claims 1 to 12, wherein the means for training is configured to use at least a subset of the private data for the training.

14. The apparatus according to any of claims 1 to 13, further comprising
means for deleting or encrypting the system-specific hyperparameters when the sufficiently trained machine learning model is obtained.

15. The apparatus according to any of claims 1 to 14, further comprising
means for deciding whether one of the hyperparameters is system-specific.
